(19) Europäisches Patentamt
European Patent Office
Office européen des brevets

(11) Veröffentlichungsnummer : **0 337 144 B1**

(12) # EUROPÄISCHE PATENTSCHRIFT

(45) Veröffentlichungstag der Patentschrift : **13.05.92 Patentblatt 92/20**

(51) Int. Cl.$^5$ : **B01J 20/32,** B01D 15/08

(21) Anmeldenummer : **89104650.0**

(22) Anmeldetag : **16.03.89**

(54) **Trennmaterialien.**

(30) Priorität : **31.03.88 DE 3811042**

(43) Veröffentlichungstag der Anmeldung : **18.10.89 Patentblatt 89/42**

(45) Bekanntmachung des Hinweises auf die Patenterteilung : **13.05.92 Patentblatt 92/20**

(84) Benannte Vertragsstaaten : **BE CH DE FR GB IT LI NL SE**

(56) Entgegenhaltungen :
**EP-A- 0 172 579**
**DE-A- 2 750 595**

(56) Entgegenhaltungen :
**FR-A- 2 332 287**
**Römpp, Chemielexikon Seiten 4804-5, 6. Auflage 1966, Franckh'sche Verlagsbuchhandlung, Stuttgart**

(73) Patentinhaber : **MERCK PATENT GESELLSCHAFT MIT BESCHRÄNKTER HAFTUNG**
**Frankfurter Strasse 250 Postfach 4119**
**W-6100 Darmstadt (DE)**

(72) Erfinder : **Müller, Werner, Prof., Dr.**
**Giessener Strasse 4**
**W-6148 Heppenheim (DE)**
Erfinder : **Kinkel, Joachim, Dr.**
**Waldhilbersheimer Strasse 4**
**W-6531 Guldental (DE)**

EP 0 337 144 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Trennmaterialien auf Basis von hydroxylgruppenhaltigen Trägern, deren Oberflächen mit kovalent gebundenen Polymeren beschichtet sind, wobei die Polymeren gleiche oder verschiedene wiederkehrende Einheiten der Formel I

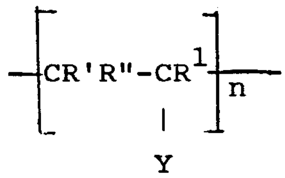

I

worin

$R^1$ H oder $CH_3$

Y

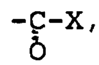

-CN, -CHO,

-OH, $-CH_2-NH_2$ oder $-CH_2NR^2R^3$,

R′ und R″ jeweils H oder $CH_3$, und falls Y = -OH kann einer der Reste R′ und R″ auch -OH sein,

X -OH, $-NR^2R^3$ oder $-OR^4$,

$R^2$und $R^3$ jeweils

eine Alkyl-, Phenyl-, Phenylalkyl- oder Alkylphenylgruppe mit bis zu 10 C-Atomen in der Alkylgruppe, wobei diese Gruppen ein- oder mehrfach substituiert sein können durch Alkoxy-, Cyano-, Amino-, Mono- oder Dialkylamino-, Trialkylammonium-, Carboxyl-, Sulfonsäure-, Acetoxy- oder Acetamino-Reste,

einen cyclischen oder bicyclischen Rest mit 5-10 C-Atomen, worin eine oder mehrere CH- oder $CH_2$-Gruppen durch N oder NH, N oder NH und S, oder N oder NH und O ersetzt sind,

oder ein Sulfonsulfid der Struktur $-(CH_2)_n-SO_2-(CH_2)_n\ S(CH_2)_nOH$ mit n = 2-6 bedeuten und einer der Reste $R^2$ und $R^3$ auch H bedeuten kann,

wobei $R^2$ und $R^3$ so aufeinander abgestimmt sind, daß entweder beide Reste sauer oder basisch oder einer oder beide der Reste neutral sind,

n 2 bis 100,

und $R_4$ eine Alkyl-, Phenyl-, Phenylalkyl- oder Alkylphenylgruppe mit bis zu 10 C-Atomen in der Alkylgruppe, wobei diese Gruppen ein- oder mehrfach substituiert sein können durch Alkoxy-, Cyano-, Carboxyl-, Sulfonsäure- oder Acetoxy-Reste bedeutet,

aufweisen sowie ein Verfahren zu deren Herstellung.

Die erfindungsgemäßen Trennmaterialien können zur Trennung von Makromolekülen, insbesondere zur Fraktionierung von Biopolymeren, eingesetzt werden.

Die Auftrennung und Reinigung biologischer Makromoleküle, wie z.B. Nucleinsäuren, Proteine, Enzyme, subzelluläre Einheiten, Peptide, monoklonale Antikörper oder ganze Zellen, hat im Hinblick auf die Gentechnologie und Biotechnologie große Bedeutung erlangt.

In der Literatur sind einige Trennmethoden für Biopolymere beschrieben.

Es ist z.B. bekannt, daß sich Nucleinsäure- und Proteingemische in wäßrigem Polyethylenglykol-Dextran-Zweiphasensystem im Gegenstromverteilungsverfahren trennen lassen (P.A. Albertson (1971), 2nd Ed., Almquist & Wiksell, Stockholm). Als Weiterentwicklung werden in den EP 0154246 Phasenträger für die Verteilungschromatographie von Biopolymeren in einem Zweiphasensystem beschrieben. Diese Phasenträger bestehen aus nicht-adsorptiven, in dem Phasensystem unlöslichen Grundtägerteilchen, deren Oberfläche mit einem fest anhaftenden Material (beispielsweise chemisch gebundenem Polyacrylamid) mit Affinität für eine der Phasen des Phasensystems beschichtet ist.

Bekannt ist auch der Einsatz von Ionenaustauschern zur Fraktionierung von biologischen Makromolekülen. Die herkömmlichen Materialien bestehen aus Polymeren wie z.B. Polymethacrylate, Polystyrole, Agarose, venetztes Dextran oder Kieselgelen, die entsprechende funktionelle Gruppen tragen.

Aus EP-A-0 172 579 sind chromatographische Trägermaterialien bekannt, bei deren Herstellung verschiedene Monomere copolymerisiert werden und das Copolymerisat anschließend an Kieselgel gebunden wird. Das Copolymerisat enthält Gruppen, die diese Bindung zum Kieselgel herstellen. Die Bindung erfolgt deswegen zufallsbedingt. Weiterhin ist das Kopolymerisat vorzugsweise vernetzt. Dadurch entsteht ein relativer starrer Träger, der den zu trennenden Molekülen seine Konfiguration aufzwingt. Im übrigen ist das Copolymerisat wesentlich raumerfüllender als das Monomere; dadurch ist die mögliche Oberflächenbeladung stark eingeschränkt. Schließlich sind die Copolymere unter Beteiligung einer (Si-O-C)-Bindung an den Träger gebunden. Diese Bindungen sind hydrolyseempfindlich.

Das Auflösungsvermögen und die Bindungskapazität solcher Materialien sind jedoch häufig sehr unbefriedigend. Ferner werden die zu trennden Biomoleküle oftmals denaturiert oder nicht mehr vollständig eluiert.

Die Zielsetzung in der vorliegenden Erfindung besteht darin, universell in der Chromatographie einsetzbare Trennmaterialien für die Fraktionierung von Biopolymeren zu entwickeln, die frei von den genannten Nachteilen sind, d.h. die bei hoher Kapazität die zu trennenden Moleküle voll reversibel ohne Denaturierung zu binden vermögen. Überraschenderweise wurde gefunden, daß die erfindungsgemäßen Trennmaterialien die oben genannten Voraussetzungen erfüllen und für die Fraktionierung von Makromolekülen, insbesondere von Biopolymeren, geeignet sind. Dabei sind diese Trennmaterialien universell geeignet für die Affinitätschromatographie, Reversed Phase oder hydrophobe Chromatographie oder ganz besonders für die Ionenaustauschchromatographie.

Gegenstand der Erfindung sind somit Trennmaterialien auf Basis von hydroxylgruppenhaltigen Trägern, deren Oberflächen mit kovalent gebundenen Polymeren beschichtet sind, dadurch gekennzeichnet, daß,

a) der Träger alkoholische Hydroxylgruppen enthält,

b) die kovalent gebundenen Polymeren durch Pfropfpolymerisation an den Träger gebunden sind,

c) die Polymeren gleiche oder verschiedene wiederkehrende Einheiten der Formel 1 aufweisen.

Ferner ist gegenstand der erfindung ein Verfahren zur Herstellung von Trennmaterialien auf Basis von alkoworischen hydroxylgruppenhaltigen Trägern, deren Oberflächen mit kovalent gebundenen Polymeren beschichtet sind, durch Pfropfpolymerisation, bei welchem die hydroxylgruppenhaltigen Trägerteilchen in Gegenwart von Cer(IV)-Ionen in einer Lösung der Monomeren der Formel II

$$CR^*R^{**} = CR^1Y \quad II$$

worin

$R^1$, $R^*$ jeweils H oder $CH_3$,

und $R^{**}$

Y

$$-\underset{\underset{O}{\|}}{C}-X,$$

-CN, -CHO, $-OCOCHR^5R^6$,

$-CH_2NH_2$ oder $-CH_2NR^2R^3$,

X -OH, $-NR^2R^3$ oder $OR^4$,

$R^2$und $R^3$ jeweils eine

Alkyl-, Phenyl-, Phenylalkyl- oder Alkylphenylgruppe mit bis zu 10 C-Atomen in der Alkylgruppe, wobei diese Gruppen ein- oder mehrfach substituiert sein können durch Alkoxy-, Cyano-, Amino-, Mono- oder Dialkylamino-, Trialkylammonium-, Carboxyl-, Sulfonsäure-, Acetoxy- oder Acetamino-Reste,

einen cyclischen oder bicyclischen Rest mit 5-10 C-Atomen worin eine oder mehrere CH- oder $CH_2$-Gruppen durch N oder NH, N oder NH und S, oder N oder NH und O ersetzt sind,

oder ein Sulfonsulfid der Struktur $-(CH_2)_n-SO_2-(CH_2)_n\ -S(CH_2)_nOH$ mit n = 2-6 bedeuten und einer der Reste $R^1$ und $R^2$ auch H bedeuten kann, wobei $R^2$ und $R^3$ so aufeinander abgestimmt sind, daß entweder beide Reste sauer oder basisch oder einer oder beide der Reste neutral sind,

$R^4$ eine Alkyl-, Phenyl-, Phenylalkyl- oder Alkylphenylgruppe mit bis zu 10 C-Atomen in der Alkylgruppe, wobei diese Gruppen ein- oder mehrfach substituiert sein können durch Alkoxy-, Cyano-, Carboxyl-, Sulfonsäure- oder Acetoxy-Reste,

und

$R^5$ und $R^6$ jeweils H oder eine Alkylgruppe mit bis zu 5 C-Atomen

bedeuten

und/oder der Formel III

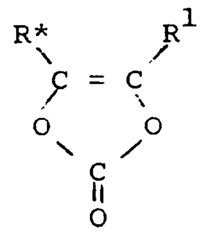

III

worin R* und $R^1$ H oder $CH_3$ bedeuten,
suspendiert und polymerisiert werden und gegebenenfalls das so erhaltene Produkt anschließend in ein Trennmaterial mit Hydroxylgruppen überführt wird.

Gegenstand der Erfindung ist auch die Verwendung dieser Trennmaterialien zur Fraktionierung von Biopolymeren.

Die Struktur der erfindungsgemäßen Trennmaterialien ist derjenigen der Phasenträger in EP 0154246 ähnlich. Im Gegensatz zu den dort beschriebenen Materialien weisen bei den erfindungsgemäßen Verbindungen die Polymeren an der Oberfläche der Trägerteilchen jedoch andere Strukturen und Eigenschaften auf. Die in der EP 0154246 beschriebenen Materialien werden in erster Linie als Phasenträger für die Verteilungschromatographie in Zweiphasensystemen eingesetzt und enthalten selbst keine chromatographisch aktiven Gruppen. Im Gegensatz dazu sind die erfindungsgemäßen Materialien selbst chromatographisch aktiv und können als Ionenaustauscher sowie als Träger für die Affinitätschromatographie oder die hydrophobe Chromatographie eingesetzt werden.

Die erfindungsgemäßen Trennmaterialien bestehen aus Trägerteilchen mit Hydroxylgruppen, auf die über die α-C-Atome der Hydroxylgruppen ein polymeres Material, ausgehend von den Monomeren der Formeln II und/oder III, aufgepfropft ist.

Als Trägerteilchen kommen alle allgemein bekannten porösen und unporösen Chromatographieträger, die primäre oder sekundäre, alipathische Hydroxylfunktionen an der Oberfläche aufweisen, in Frage.

Bevorzugt sind dabei beispielsweise hydrophile Polymere auf Acrylat- und Methacrylatbasis, Polymere auf Polyvinylalkohol-Basis, diolsubstituierte Kieselgele, Polysaccharide auf Agarose-Basis, Cellulose, Cellulosederivate oder Polymere auf Dextran-Basis. Es können aber selbstverständlich auch andere Polymere oder Copolymere auf der Grundlage von Monomeren wie Vinylverbindungen, Acrylamid, (Meth)Arcylsäureestern oder (Meth)Acrylnitril in hydroxylierter Form eingesetzt werden.

Das polymere Material, das über die α-C-Atome der Hydroxylgruppen an die Trägerteilchen gebunden ist, basiert auf den Monomeren der Formeln II und/oder III. Diese Monomeren stellen (Meth)Acrylsäure (Y = -CO-OH), (Meth)Acrylsäurederivate

(Y = 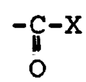),

Allylamine (Y = $-CH_2NH_2$, $-CH_2NR^2R^3$), (Meth)Acrylnitrile (Y = -CN), Acroleine (Y = -CHO), Vinylcarboxylate (Y = $-OCOCHR^5R^6$) oder Vinylencarbonate der Formel III dar.

Alle diese Monomere stellen in wäßriger Lösung radikalisch polymerisierbare Substanzen mit reversibel bindenden Gruppen dar, die neutral, sauer oder basisch sein können.

Werden als Monomere Vinylencarbonate der Formel III oder Vinylcarboxylate $CR^*R^{**} = CR^1\text{-}OCOCHR^5R^6$ der Formel II eingesetzt, so wird vorzugsweise das erhaltene Produkt anschließend in ein Trennmaterial mit Hydroxylgruppen überführt. Diese Überführung in eine Hydroxyl-Phase wird durch eine an sich bekannte milde alkalische oder saure Verseifung erreicht. Beispielsweise kann die Reaktion mit methanolischer $K_2CO_3$-Lösung bei Raumtemperatur, beschrieben z.B. von Y. Tezuka et al., in Macromol. Chem. 186, 685-694 (1985), durchgeführt werden.

In den Formeln I, II und III bedeutet $R^1$ vorzugsweise H, d.h. die Acrylsäurederivate sind bevorzugt.

Y in Formel II bedeutet vorzugsweise

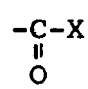,

$-OCOCHR^5R^6$ oder $-CH_2NH_2$, in zweiter Linie bevorzugt -CN oder -CHO. Dementsprechend bedeutet Y in Formel I in erster Linie bevorzugt

$$-\underset{\underset{O}{\|}}{C}-X,$$

-OH (da vorzugsweise die $-OCOCHR^5R^6$-Gruppe in eine Hydroxylphase umgewandelt wird) oder $-CH_2NH_2$, in zweiter Linie bevorzugt -CN oder -CHO.

$R^5$ und $R^6$ bedeuten unabhängig voneinander H oder eine Alkylgruppe mit bis zu 5 C-Atomen. Vorzugsweise ist mindestens einer der Reste $R^5$ und $R^6$ H. Folgende Reste sind besonders bevorzugt: Acetyloxy-, Propionyloxy-, Butyryloxy-, Valeryloxy- und Hexanoyloxy-Rest.

X bedeutet sowohl in Formel I als auch in Formel II $-OR^4$, -OH oder $-NR^2R^3$, vorzugsweise $-NR^2R^3$.

Bevorzugt sind dabei Verbindungen, in denen X $-NR^2R^3$ bedeutet und einer der Reste $R^2$ und $R^3$ H ist.

Die Reste $R^2$ und/oder $R^3$ bedeuten bevorzugt eine Alkyl-, Phenyl-, Phenylalkyl- oder Alkylphenylgruppe, wobei die Alkyl- und/oder die Phenylgruppe ein- oder mehrfach, vorzugsweise ein- oder zweifach, insbesondere bevorzugt einfach, substituiert sein kann durch einen Alkoxy-, Cyano-, Amino-, Mono- oder Dialkylamino-, Trialkylammonium-, Carboxyl-, Sulfonsäure-, Acetoxy- oder Acetamino-Rest.

Die Reste $R^2$ und/oder $R^3$ bedeuten bevorzugt Alkyl, Alkoxyalkyl, Cyanoalkyl, Aminoalkyl, Mono- oder Dialkylaminoalkyl, Trialkylammoniumalkyl, Carboxyalkyl oder Sulfonsäurealkyl mit bis zu 10 C-Atomen, bevorzugt bis zu 6 C-Atomen, insbesondere bevorzugt bis zu 4 C-Atomen in der Alkylgruppe, die linear oder verzweigt sein kann. $R^2$ und/oder $R^3$ bedeuten demnach bevorzugt Methyl, Ethyl, Propyl, Butyl, Pentyl, Hexyl, Methoxymethyl, Ethoxymethyl, 2-Methoxyethyl, 2-, 3- oder 4-Oxapentyl, 2-, 3-, 4- oder 5-Oxahexyl, 2-, 3-, 4-, 5- oder 6-Oxaheptyl, Isopropyl, 2-Butyl, Isobutyl, 2-Methylbutyl, Isopentyl, 2-Methylpentyl, 3-Methylpentyl, 2-Oxa-3-methylbutyl, 3-Oxa-4-methylbutyl, 2-Methyl-3-oxapentyl, 2-Methyl-3-oxahexyl, ferner auch Heptyl, Octyl, Nonyl oder Decyl.

Ferner bevorzugt sind auch Alkylgruppen, die durch eine Cyano, Carboxy- oder Sulfonsäuregruppe substituiert vorliegen. Demnach bedeuten $R^2$ und/oder $R^3$ bevorzugt Cyanomethyl, Cyanoethyl, Cyanopropyl, Cyanobutyl, Cyanopentyl, Cyanohexyl, 2-Cyanopropyl, 2-Cyanobutyl, Carboxylmethyl, Carboxylethyl, Carboxylpropyl, Carboxylisopropyl, Carboxylbutyl, Carboxylpentyl, Carboxylhexyl, Carboxyl-2-methylpropyl, Carboxyl-2-methylbutyl, Sulfonsäuremethyl, Sulfonsäureethyl, Sulfonsäurepropyl, Sulfonsäurebutyl, Sulfonsäurepentyl, Sulfonsäurehexyl, Sulfonsäure-2-methylpropyl, Sulfonsäure-2-methylbutyl, Sulfonsäure-3-methylbutyl, Sulfonsäure-2-methylpentyl, Sulfonsäure-3-methylhexyl oder Sulfonsäure-2-ethylpentyl.

Ferner sind die Alkylgruppen bevorzugt einfach substituiert durch eine Amino-, Mono- oder Dialkylamino- oder Trialkylammoniumgruppe. Die Alkylgruppen können dabei gleich oder verschieden sein und bis zu 10, vorzugsweise bis zu 6 C-Atomen, insbesondere bevorzugt bis zu 4 C-Atomen, besitzen und bedeuten demnach vorzugsweise Dimethylaminoethyl, Diethylaminoethyl, Methylaminoethyl, Methylaminopropyl, Dimethylaminopropyl, Ethylaminoethyl, Propylaminoethyl, Propylaminopropyl, Dipropylaminoethyl, Dipropylaminobutyl, Diethylaminoethyl, Trimethylammoniumethyl, Trimethylammoniumpropyl, Trimethylammoniumbutyl, Triethylammoniumethyl, Triethylammoniumpropyl, Triethylammoniumethyl, Aminoethyl, Aminopropyl, Aminobutyl oder Aminopentyl. Alle diese Alkyl- und substituierte Alkylgruppen sind ebenfalls bevorzugt als Substituenten an der Phenylgruppe.

Bevorzugt für $R^2$ und/oder $R^3$ ist auch ein Sulfonsulfid der Struktur $-(CH_2)_n-SO_2-(CH_2)-S-(CH_2)_nOH$ mit n = 2, 3, 4, 5 oder 6, vorzugsweise 2, 3 oder 4.

Vorzugsweise hat $R^2$ und/oder $R^3$ auch die Bedeutung einer Phenylgruppe, die vorzugsweise einfach substituiert ist durch Cyano, Cyanoalkyl, Amino, Aminoalkyl, Mono- oder Dialkylamino, Alkyl, Alkoxy, Alkoxyalkyl, Mono- oder Dialkylaminoalkyl, Trialkylammonium- oder Trialkylammoniumalkyl, Carboxy, Carboxyalkyl, Sulfonsäure oder Sulfonsäurealkyl. Die bevorzugten Bedeutungen dieser Substituenten entsprechen den vorstehend angegebenen bevorzugten Alkylgruppen und substituierten Alkylgruppen. Der Substituent an der Phenylgruppe sitzt vorzugsweise in p-Stellung.

p-Acetoxyphenyl, p-Aminophenyl oder p-Acetaminophenyl sind ebenfalls bevorzugte Bedeutungen für $R^2$ und/oder $R^3$.

Bevorzugt für $R^2$ und/oder $R^3$ ist ferner eine Alkylphenyl- oder Phenylalkylgruppe, wobei ebenfalls die angegebenen bevorzugten Bedeutungen für die Alkyl-, substituierten Alkyl- oder substituierten Phenylgruppen gelten sollen.

Demnach gelten folgende substituierte Phenylgruppen beispielsweise als besonders bevorzugt: 4-Cyanophenyl, 4-Alkylphenyl, 4-(N,N-Dimethylamino)-phenyl, 4-(N,N-Dialkyl aminoethyl)-phenyl, 4-Ethoxyphenyl, 4-Ethoxyethylphenyl, 4-Trialkylammoniumphenyl, 4-Carboxylphenyl, 4-Sulfonsäurephenyl, Phenylethyl, 4-(N-Ethylamino)phenylpropyl oder 4-Cyanophenyl-ethyl.

Des weiteren sind Einheiten der Formel I bzw. Monomere der Formel II bevorzugt, in denen $R^2$ und/oder $R^3$ einen cyclischen oder bicyclischen Rest, der aromatisch oder gesättigt sein kann, mit 5-10 C-Atomen, worin ein- oder mehrere CH- oder $CH_2$-Gruppen durch N oder NH, N oder NH und S, oder N oder NH und O ersetzt sind, bedeuten.

$R^2$ und/oder $R^3$ bedeuten demnach bevorzugt auch einen Pyridinrest, Imidazolylrest, Indolylrest, ferner bevorzugt einen Pyrrol-, Pyrimidin-, Pyrazin-, Chinolin- oder Isochinolinrest.

$R^2$ und/oder $R^3$ können beispielsweise auch einen Thiazol-, Thiadiazol-, Morpholin-, Triazin-, Piperazin-, Benzothiazol-, Purin-, Pyrazol-, Triazol-, Pyrrolidin- oder Isoxazol-Rest bedeuten.

Insbesondere bevorzugt sind dabei die aromatischen, heterocyclischen Reste.

Die Reste $R^2$ und $R^3$ müssen, um zu geeigneten Austauschern zu gelangen, so aufeinander abgestimmt werden, daß entweder beide Reste eine saure oder basische Gruppe enthalten oder aber einer der Reste neutral ist. Dem Fachmann bereitet es keine Schwierigkeit, die Gruppen entsprechend zuzuordnen und somit geeignete Reste für $R^2$ und $R^3$ zusammenzustellen, je nach Funktion und Aufgabe des gewünschten Ionenaustauschers.

Vorzugsweise ist einer der beiden Reste $R^2$ und $R^3$ ein neutraler Rest.

$R^4$ bedeutet bevorzugt Alkyl, Alkoxyalkyl, Cyanoalkyl, Carboxyalkyl oder Sulfonsäurealkyl mit bis zu 10 C-Atomen, vorzugsweise mit bis zu 6 C-Atomen, insbesondere bevorzugt mit bis zu 4 C-Atomen in der Alkylgruppe, die linear oder verzweigt sein kann. $R^4$ bedeutet demnach bevorzugt Methyl, Ethyl, Propyl, Butyl, Pentyl, Hexyl, Methoxymethyl, Ethoxymethyl, 2-Methoxyethyl, 2-, 3- oder 4-Oxapentyl, Isopropyl, 2-Butyl, Isobutyl, 2-Methylbutyl, Isopentyl, 2-Methylpentyl, 3-Methylpentyl, 2-Oxa-3-methylbutyl, 3-Oxa-4-methylbutyl, 2-Methyl-3-oxapentyl oder 2-Methyl-3-oxahexyl.

Ferner bevorzugt sind auch Alkylgruppen, die durch eine Cyano, Carboxy- oder Sulfonsäuregruppe substituiert vorliegen. Demnach bedeutet $R^4$ bevorzugt Cyanomethyl, Cyanoethyl, Cyanopropyl, Cyanobutyl, Cyanopentyl, Cyanohexyl, 2-Cyanopropyl, 2-Cyanobutyl, Carboxylmethyl, Carboxylethyl, Carboxylpropyl, Carboxylisopropyl, Carboxylbutyl, Carboxylpentyl, Carboxylhexyl, Carboxyl-2-methylpropyl, Carboxyl-2-methylbutyl, Sulfonsäuremethyl, Sulfonsäureethyl, Sulfonsäurepropyl, Sulfonsäurebutyl, Sulfonsäurepentyl, Sulfonsäurehexyl, Sulfonsäure-2-methylpropyl, Sulfonsäure-2-methylbutyl, Sulfonsäure-3-methylbutyl, Sulfonsäure-2-methylpentyl, Sulfonsäure-3-methylhexyl oder Sulfonsäure-2-ethylpentyl.

Alle diese Alkyl- und substituierten Alkylgruppen sind ebenfalls bevorzugt als Substituenten an der Phenylgruppe.

Vorzugsweise hat $R^4$ auch die Bedeutung einer Phenylgruppe, die vorzugsweise einfach substituiert ist durch Cyano, Cyanoalkyl, Alkyl, Alkoxy, Alkoxyalkyl, Carboxy, Carboxyalkyl, Sulfonsäure oder Sulfonsäurealkyl. Die bevorzugten Bedeutungen dieser Substituenten entsprechen den vorstehend angegebenen bevorzugten Alkylgruppen und substituierten Alkylgruppen. Der Substituent an der Phenylgruppe sitzt vorzugsweise in p-Stellung.

$R^*$ und $R^{**}$ in den Monomeren der Formel II bedeuten vorzugsweise H, und damit haben auch $R'$ und $R''$ in Formel I vorzugsweise die Bedeutung Wasserstoff.

Bevorzugt sind auch Trennmaterialien, bei denen in Formel I Y = -OH ist und einer der Reste $R'$ und $R''$ ebenfalls -OH bedeutet. Als Monomeres muß dann ein Vinylencarbonat der Formel III eingesetzt werden, und das bei der Polymerisation entstandene Produkt anschließend in eine Hydroxylphase überführt werden.

$R^*$ und $R^1$ in Formel III bedeuten vorzugsweise H. n in Formel I stellt die Anzahl der wiederkehrenden Einheiten dar und bedeutet 2-100, vorzugsweise 5-60, insbesondere sind Kettenlängen von 10-30 bevorzugt.

Zur Herstellung der erfindungsgemäßen Materialien werden die hydroxylgruppenhaltigen Trägerteilchen in einer Lösung von Monomeren suspendiert, vorzugsweise in einer wäßrigen Lösung. Das Aufpfropfen des polymeren Materials wird im Zuge einer üblichen Redoxpolymerisation unter Sauerstoffausschluß bewirkt. Als Polymerisations-Katalysator werden Cer(IV)-Ionen eingesetzt, da dieser Katalysator an der Oberfläche der Trägerteilchen Radikalstellen bildet, von welchen die Pfropfpolymerisation der Monomere gestartet wird. Die Länge und Anzahl der entstehenden Ketten können vom Fachmann durch Einstellen der Cer(IV)-Salz- und der Monomerkonzentration nach Wunsch gesteuert werden.

Bezüglich Einzelheiten dieses an sich bekannten Verfahrens wird auf E. Mino und S. Kaizerman in J. of Polymer Science, Vol. XXXI, Nr. 122 (1958), 242-243 verwiesen.

Zur Herstellung von Trennmaterialien die ein Copolymer an der Oberfläche gebunden haben, werden einfach die entsprechenden, verschiedenen Monomeren der Formeln II und/oder III in der Lösung suspendiert.

Für eine Copolymerisation müssen dabei, um erfindungsgemäße Austauscher zu erhalten, die Monomeren der Formel I so gewählt werden, daß beide Monomere entweder basische oder saure Gruppen enthalten oder ein Monomeres neutral ist.

Ansonsten gelten für die Auswahl der Monomeren, die für eine Copolymerisation geeignet sind, die allgemeinen Regeln und Bedingungen, die der Fachmann aus dem Stand der Technik entnehmen kann.

Die Vielzahl der einsetzbaren Monomeren der Formeln II und/oder III führen zu einer großen Palette von schwach basischen, schwach sauren bis stark sauren oder basischen Austauschern sowie Trägern für die Affinitätschromatographie oder die hydrophobe Chromatographie.

Die erfindungsgemäßen Materialien sind insbesondere für die Fraktionierung von Biopolymeren, wie z.B. Peptide, Proteine und Nucleinsäuren geeignet.

Weiter können diese Materialien zur Trennung und Reinigung von Viren, Zellorganellen, prokaryontischen oder eukaryontischen Zellen sowie Proteinkomplexen eingesetzt werden.

Für jedes Trennproblem kann bei der großen Anzahl von Monomeren das optimale Trennmaterial hergestellt werden, so daß Affinitätseffekte mit ionischen Bindungen kombiniert werden können.

Als Ionenaustauschmaterialien sind besonders die Trennmaterialien geeignet, die in Formel I

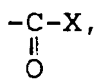

$-CH_2NH_2$ oder $-CH_2NR^2R^3$ enthalten. Materialien mit einer -CHO-Gruppe in Formel I sind besonders für die Affinitätschromatographie geeignet.

Es hat sich gezeigt, daß die erfindungsgemäßen Materialien mit sehr viel höherer Bindungskapazität herstellbar sind als die üblichen Ionenaustauscher bzw. die üblichen Träger für die Affinitätschromatographie.

Außerdem werden bei diesen Materialien beispielsweise Desoxyribonucleinsäuren voll reversibel gebunden und Restriktionsfragmente werden nach ihrer Größe aufgetrennt.

Ein großer Vorteil dieser neuen Austauscher liegt darin, daß durch die Beweglichkeit der aufgepfropften Kettenpolymeren jedes geladene Makromolekül entsprechende Gegengruppen im optimalen Abstand zur Matrix findet.

Außerdem entstehen keine strukturellen Änderungen des gebundenen Makromoleküls, da sich der Austauscher mit seinen z.B. basischen Austauschergruppen an die Anordnung der sauren Gruppen eines Makromoleküls anpaßt und nicht umgekehrt.

Mit den erfindungsgemäßen Materialien steht somit eine Vielzahl von verschiedenartigsten Trennmaterialien, die bezuglich Struktur und Funktionsweise neu sind, zur Trennung von Makromolekülen, insbesondere Biopolymeren zur Verfügung.

Die folgenden Beispiele dienen der weiteren Erläuterung der Erfindung.

In den Beispielen wurden folgende hydroxylgruppenhaltige Träger als Ausgangsmaterialien eingesetzt:
Fractogel® TSK HW 65 (S) -5S(S)- poröses Mischpolymeres auf Vinylbasis, 1 m Äq OH/g. (Fa. E. Merck)
LiChrospher®-Diol: Diolsubstituiertes Kieselgel (Fa. E. Merck).

## Beispiel 1

Herstellung eines schwach sauren Kationenaustauschers:

50 ml abgesaugtes Fractogel® HW 65(s) werden in einer Lösung von 19 g Acrylsäure in 150 ml Wasser suspendiert, mit Argon durchspült und unter Sauerstoffausschluß bei 25 °C mit 15 ml einer 0,4 M Lösung von Ammonium-Cer(IV)-nitrat in 0,1 M $HNO_3$ versetzt und 3 Stdn. bei der gleichen Temperatur gerührt. Das Reaktionsprodukt wird abgesaugt, mit Wasser, dannach mit 500 ml Natriumsulfit in 10 %iger Essigsäure, anschließend mit 500 ml 0,2 M NaOAc-Lösung und schließlich wieder mit Wasser gewaschen.

Das Produkt enthält 0.8 mVal saure Gruppen pro ml und bindet 99 mg Lysozym pro ml gepackten Gels aus 20 mM Na-Phosphat-Puffer, pH 7,0, welches in 0,5 Mol/l NaCl in Phosphat vollständig wieder abgegeben wird.

## Beispiel 2

Herstellung eines schwach basischen Ionenaustauschers:

100 ml sedimentiertes LiChrospher®-Diol (1000 Å Porenweite, 10 µm Partikelgröße) werden gründlich mit dest. Wasser, 0,2 M NaOAc-Lösung und wieder mit Wasser gewaschen und in einer Lösung von 104 g N,N-Dimethylaminoethyl-acrylamid (A) in 700 ml Wasser (mit $HNO_3$ auf pH 5.0 eingestellt) in einem 1000 ml-Reaktionsgefäß mit Thermostatenmantel suspendiert, auf 25 °C temperiert und der Luftsauerstoff aus der Suspension durch Ar verdrängt. 100 ml einer 0,4 M Cer-ammonium-nitrat-Lösung in 1 M $HNO_3$ werden unter Luftabschluß zugesetzt, und die Suspension wird bei ca. 200 UpM mit einem Flügelrührer 3 Stdn. gerührt. Die

Reaktion wird durch Luftzutritt gestoppt, das Reaktionsprodukt abfiltriert, mit 500 ml Wasser gewaschen, mit 500 ml 0.2 M $Na_2SO_3$ in 10 % AcOH danach mit 500 ml 0,2 M NaOAc gespült und mit Wasser neutral gewaschen.
N-Gehalt: 1,1 %; Bindungskapazität für Rinder-Serum-Albumin: 60 mg/ml Gel (0,05 M Tris-Puffer, pH 8,3).

Beispiel 3

Herstellung eines basischen Austauschers:

Pfropfpolymerisation auf LiChrospher®-Diol (1000 Å Porenweite, 10 um Partikelgröße)
Die Herstellung erfolgt analog Beispiel 2; anstelle von (A) werden jedoch 123 g N,N-Diethylaminoethyl-acrylamid (B) eingesetzt.
N-Gehalt: 0,5 %; Bindungskapazität für Rinder-Serum-Albumin: 45 mg/ml (0,05 M Tris-Puffer, pH 8,3).

Beispiel 4

Herstellung eines stark basischen Anionenaustauschers:

Ausgangsmaterial: LiChrospher®-Diol (1000 Å Porenweite, 10 µm Partikelgröße)
Die Herstellung erfolgt analog Beispiel 2; anstelle von (A) werden 113 g Trimethylammoniumethyl-acrylamid (C) eingesetzt.
N-Gehalt: 0,5 %; Bindungskapazität für Rinder-Serum-Albumin: 76,3 mg/ml Gel (0,05 M Tris-Puffer, pH 8,3).

Beispiel 5

Herstellung eines stark sauren Austauschers:

Ausgangsmaterial: LiChrospher®-Diol (1000 Å Porenweite, 10 µm Partikelgröße)
Die Herstellung erfolgt analog Beispiel 2; anstelle von (A) werden 150 g 2-Acrylamido-2-methylpropansulfonsäure (D) eingesetzt.
N: 0,2 %; S: 0,2 %; Bindungskapazität für Lysozym: 36 mg/ml Gel (20 mM $PO_4$, pH 7,0)

Beispiel 6

Herstellung eines schwach basischen Austauschers

Ausgangsmaterial: Fractogel® TSK HW 55(S)
Die Herstellung erfolgt analog Beispiel 2; anstelle von LiChrospher®-Diol werden 100 ml Fractogel® eingesetzt und 60 g N,N-Dimethylaminoethyl-acrylamid (A).
N: 5,31 %; Bindungskapazität für Rinder-Serum-Albumin: 57 mg/ml Gel (0,05 M Tris, pH 8,3).

Beispiel 7

Herstellung eines basischen Austauschers:

Ausgangsmaterial: Fractogel® TSK HW 65 (M)
Die Herstellung erfolgt analog Beispiel 2; anstelle von (A) werden 123 g N,N-Diethylaminoethyl-acrylamid eingesetzt.
N: 2,5 %; Bindungskapazität für Rinder-Serum-Albumin: 79 mg/ml Gel (0,05 M Tris-Puffer, pH 8,3).

Beispiel 8

Herstellung eines stark basischen Anionenaustauschers:

Ausgangsmaterial: Fractogel® TSK HW 65(M) 100 ml 113 g Trimethylammoniumethylacrylamid
Die Herstellung erfolgt analog Beispiel 2.
N: 3,80 %; Bindungskapazität für Rinder-Serum-Albumin: 154 mg/ml Gel (0,05 M Tris-Puffer, pH 8,3).

Beispiel 9

Analog Beispiel 2 stellt man aus 100 ml Fractogel® TSK HW 65(S) und 150 g 2-Acrylamido-2-methylpropansulfonsäure einen stark sauren Ionenaustauscher her.

N: 0,5 %, S: 0,7 %; Bindungskapazität für Lysozym: 51 mg/ml Gel (20 mM $PO_4$, pH 7,0).

In den vorstehenden Beispielen bedeutet

Tris: Tris (hydroxymethyl)aminomethan . HCl und $PO_4$: Natriumphosphatpuffer.

Beispiel 10

Analog Beispiel 1 stellt man ein Cyano-Fractogel, geeignet für die Reversed-Phase Chromatographie her, durch Umsetzung von 100 ml Fractogel® TSK HW 65(S) und 60 g Acrylnitril.

Gehalt an N: 8,9 %

Beispiel 11

Analog zu Beispiel 2 stellt man aus 100 ml LiChrospher®-Diol (1000 Å Porenweite und 10 µm Partikelgröße), 39,2 g Acrolein und 50 g N-Methylacrylamid durch Misch-Pfropfpolymerisation eine Aldehyd-Phase für die Chromatographie primärer Amine oder für die Fixierung von prim. Aminen und Proteinen für die Affinitätschromatographie her.

Beispiel 12

Analog Beispiel 1 stellt man aus 100 ml Fractogel® TSK HW 65 (s) und 160 g Allylamin eine Aminophase her.

Gehalt an N: 0,55 %.

Beispiel 13

Analog zu Beispiel 2 stellt man aus 100 ml sedimentiertem LiChrospher®-Diol (1000 Å Porenweite und 10 µm Partikelgröße) und 36 g Vinylacetat eine Acetoxy-Phase dar, die sich durch Behandlung mit methanolischer $K_2CO_3$-Lösung bei Raumtemperatur in eine Hydroxyl-Phase überführen läßt (vgl. Y. Tezuka et al., Macromol. Chem. 186, 685-694 (1985)).

Beispiel 14

Analog Beispiel 2 stellt man aus 100 ml sedimentiertem LiChrospher®-Diol (1000 Å Porenweite, 10 µm Partikelgröße) und 140 g Vinylencarbonat eine Phase her, die sich durch milde alkalische oder saure Verseifung leicht in die gewünschte Hydroxyl-Phase überführen läßt.

Die folgenden Beispiele betreffen Anwendungsbeispiele.

Beispiel A

Fraktionierung von DNA-Restriktionsfragmenten

Der nach Beispiel 2 hergestellte basische Austauscher wird in einer Superformance®-Säule (50 x 10 mm, Hersteller: E. Merck) in 20 mM Tris-HCl, pH 6,5, gepackt, mit dem gleichen Puffer bei 2 ml/min equilibriert, mit 3 Absorptionseinheiten (260 nm) Restriktionsfragmenten aus pDS1-Plasmid mit den Längen 11, 18, 31, 45, 80, 85, 87, 222, 262, 267, 270, 314, 434, 458, 587 und 657 Basenpaaren beladen. Bei der nachfolgenden Elution mit einem NaCl-Gradienten (0-1 M NaCl) im Equilibrierungspuffer bei 1 ml/min resultierte eine sehr gute Trennung der einzelnen Restriktionsfragmente.

Beispiel B

Fraktionierung von Ziegen-Serum

Das in Beispiel 8 hergestellte Material wird in einer Superformance®-Säule (50 x 10 mm) gepackt, mit 20 mM Tris-HCl, pH 8,3, equilibriert, mit 50 µl Serum in 250 µl Puffer beschickt und mit einem linearen Gradienten

von 0 - 500 mM $Na_2SO_4$ im gleichen Puffer eluiert. Man erhält eine beachtenswerte Abtrennung der Globuline vom Albumin.

Beispiel C

Trennung von ß-Lactoglobulin A und B.

Das nach Beispiel 3 hergestellte Material wird in einer Superformance®-Säule (50 x 10 mm) gepackt, mit 20 mM $Na$-$PO_4$, pH 6,8, equilibriert, mit 0,6 mg käuflichem Gemisch von ß-Lactoglobulin A und B in 100 µl Puffer beschickt und mit einem 50 ml-Gradienten von 0 - 500 mM $Na_2SO_4$ (linear) im angegebenen Puffer eluiert. Man erhält eine sehr gute Trennung von ß-Lactoglobulin A und ß-Lactoglobulin B.

Bespiel D

Fraktionierung von Maus-Ascites-Flussigkeit mit monoklonalem Antikörper.

Das nach Beispiel 3 hergestellte Material wird in einer Superformance®-Säule (50 x 10 mm) gepackt, mit 20 mM Tris-HCl, pH 8,3, equilibriert, mit 1,5 ml Ascites-Flüssigkeit in 4,5 ml Puffer beschickt, und mit einem Gradienten (100 ml) von 0 - 250 mM $Na_2SO_4$ im Startpuffer eluiert.

Beispiel E

Fraktionierung von Immunglobulin (IgG) aus Humanserum

1. Das in Beispiel 5 hergestellte Material wird in einer Superformance®-Säule (50 x 10 mm) gepackt, mit 10 mM NaOAc/HOAc, pH 5,0, equilibriert, mit 3,5 mg IgG be laden und mit einem NaCl-Gradienten (100 ml, 0 - 1 M) im gleichen Puffer eluiert. Man erhält eine relative gute Fraktionierung.
2. Fraktionierung analog zu 1. unter Verwendung des in Beispiel 9 hergestellten Materials.
3. Fraktionierung von IgG analog zu E 1. an herkömmlichen SP-Fractogel 650(s): Das erhaltene Elutionsprofil zeigt hierbei kaum eine Fraktionierung.

Man kann aus diesen Versuchen erkennen, daß bei Verwendung eines herkömmlichen Materials eine schlechtere Auftrennung erfolgt als bei Verwendung von erfindungsgemäßen Austauschern.

Beispiel F

Fraktionierung von Maus-Ascites-Flussigkeit mit monoklonalem Antikörper

Der nach Beispiel 5 hergestellte, stark saure Austauscher wird in einer Superformance®-Säule (50 x 10 mm) gepackt, mit 10 mM NaOAc/AcOH, pH 5,0, equilibriert, mit 100 µl Ascites beladen und in einem Gradienten (50 ml von 0 nach 500 mM NaCl eluiert. Man erhält eine gute Abtrennung der Immunglobuline mit dem monoklonalen Antikörper.

Aus den obigen Beispielen ist ersichtlich, daß mit den erfindungsgemäßen Ionenaustauschern sehr gute Trennergebnisse zu erzielen sind und diese Materialien vorteilhaft für die Trennung von Biopolymeren geeignet sind.

**Patentansprüche**

1. Trennmaterialien auf Basis von hydroxylgruppenhaltigen Trägern, deren Oberflächen mit kovalent gebundenen Polymeren beschichtet sind, dadurch gekennzeichnet, daß

a) der Träger alkoholische Hydroxylgruppen enthält,

b) die kovalent gebundenen Polymeren durch Propfpolymerisation an den Träger gebunden sind,

c) die Polymeren gleiche oder verschiedene wiederkehrende Einheiten der formel I

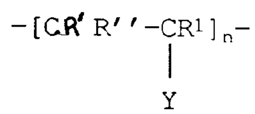

I

worin

$R^1$ H oder $CH_3$,

Y

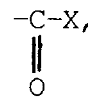

-CN, -CHO,

-OH, $-CH_2$ $-NH_2$ oder $-CH_2NR^2R^3$,

R′ und R″ jeweils H oder $CH_3$, und falls Y = -OH kann einer der Reste R′ und R″ auch -OH sein,

X -OH, $-NR^2R^3$ oder $-OR^4$,

$R^2$ und $R^3$ jeweils eine Alkyl-, Phenyl-, Phenylalkyloder Alkylphenylgruppe mit bis zu 10 C-Atomen in der Alkylgruppe, wobei diese Gruppen ein- oder mehrfach substituiert sein können durch Alkoxy-, Cyano-, Amino-, Mono- oder Dialkylamino-, Trialkylammonium-, Carboxyl-, Sulfonsäure-, Acetoxy- oder Acetamino-Reste, einen cyclischen oder bicyclischen Rest mit 5-10 C-Atomen, worin eine oder mehrere CH- oder $CH_2$-Gruppen durch N oder NH, N oder NH und S, oder N oder NH und O ersetzt sind,

oder ein Sulfonsulfid der Struktur $-(CH_2)_n-SO_2-(CH_2)_nS(CH_2)_nOH$ mit n = 2-6 bedeuten und einer der Reste $R^2$ und $R^3$ auch H bedeuten kannn

wobei $R^2$ und $R^3$ so aufeinander abgestimmt sind, daß entweder beide Reste sauer oder basisch oder einer oder beide der Reste neutral sind,

n 2 bis 100,

und $R^4$ eine Alkyl-, Phenyl-, Phenylalkyl- oder Alkylphenylgruppe mit bis zu 10 C-Atomen in der Alkylgruppe, wobei diese Gruppen ein- oder mehrfach substituiert sein können durch Alkoxy-, Cyano-, Carboxyl-, Suifonsäure- oder Acetoxy-Reste, bedeutet,

aufweisen.

2. Trennmaterialien nach Anspruch 1, dadurch gekennzeichnet, daß Y in Formel I

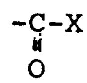

mit X = -OH oder $-OR^4$ bedeutet, wobei $R^4$ die in Anspruch 1 angegebene Bedeutung hat.

3. Trennmaterialien nach Anspruch 1, dadurch gekennzeichnet, daß Y in Formel I

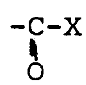

mit X = - $NR^2R^3$ ist,

worin

$R^2$ und $R^3$ jeweils

Alkyl, Alkoxyalkyl, Cyanoalkyl, Aminoalkyl, Mono- oder Dialkylaminoalkyl, Trialkylammoniumalkyl, Carboxyalkyl, Sulfonsäurealkyl mit jeweils bis zu 10 C-Atomen in der Alkylgruppe,

unsubstituiertes oder durch einen oder mehrere Alkyl-, Alkoxy-, Alkoxyalkyl, Cyano-, Cyanoalkyl-, Aminoalkyl-, Amino-, Mono- oder Dialkylamino-, Mono- oder Dialkylaminoalkyl-, Trialkylammonium-, Trialkylammoniumalkyl-, Carboxy-, Carboxyalkyl, Sulfonsäure-, Sulfonsäurealkyl-, Acetoxy- oder Acetamino-Gruppe(n) substituiertes Phenyl mit bis zu 10 C-Atomen in der Alkylgruppe,

einen cyclischen oder bicyclischen Rest mit 5-10 C-Atomen, worin eine oder mehrere CH- oder $CH_2$-Gruppen durch N oder NH, N oder NH und S, oder N oder NH und O ersetzt sind,

oder ein Sulfonsulfid der Struktur $-(CH_2)_n-SO_2-(CH_2)_n-S-(CH_2)_nOH$ mit n = 2-6 bedeuten und einer der Reste $R^2$ und $R^3$ auch H bedeuten kann, wobei $R^2$ und $R^3$ so aufeinander abgestimmt sind, daß entweder beide Reste sauer oder basisch oder einer oder beide der Reste neutral sind.

4. Trennmaterialien nach Anspruch 1, dadurch gekennzeichnet, daß Y in Formel I $-CH_2NH_2$ oder $-CH_2NR^2R^3$ ist, wobei $R^2$ und $R^3$ die in Anspruch 1 angegebene Bedeutung haben.

5. Trennmaterialien nach Anspruch 1, dadurch gekennzeichnet, daß Y in Formel I -CN, -CHO oder -OH

ist.

6. Verfahren zur Herstellung von Trennmaterialien gemaß Anspruche 1-5 auf Basis von alkoholischen hydroxylgruppenhaltigen Trägern, deren Oberflächen mit kovalent gebundenen Polymeren beschichtet sind, durch Pfropfpolymerisation, dadurch gekennzeichnet, daß die hydroxylgruppenhaltigen Trägerteilchen in Gegenwart von Cer(IV)-Ionen in einer Lösung der Monomeren der Formel II

$$CR^*R^{**} = CR^1\text{-}Y \quad II$$

worin

$R^1$, $R^*$ jeweils H oder $CH_3$,

und $R^{**}$

Y

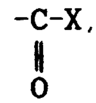

-CN, -CHO, $-OCOCHR^5R^6$,

$-CH_2NH_2$ oder $-CH_2NR^2R^3$,

X -OH, $-NR^2R^3$ oder $-OR^4$,

$R^2$ und $R^3$ jeweils eine Alkyl-, Phenyl-, Phenylalkyl- oder Alkylphenylgruppe mit bis zu 10 C-Atomen in der Alkylgruppe, wobei diese Gruppen ein- oder mehrfach substituiert sein können durch Alkoxy-,Cyano-, Amino-, Mono- oder Diallylamino-, Trialkylammonium-, Carboxyl-, Sulfonsäure-, Acetoxy- oder Acetamino-Reste, einen cyclischen oder bicyclischen Rest mit 5-10 C-Atomen worin eine oder mehrere CH- oder $CH_2$-Gruppen durch N oder NH, N oder NH und S, oder N oder NH und O ersetzt sind,

oder ein Sulfonsulfid der Struktur $-(CH_2)_n-SO_2-(CH_2)_n-S(CH_2)_nOH$ mit n = 2-6 bedeuten und einer der Reste $R^2$ und $R^3$ auch H bedeuten kann, wobei $R^2$ und $R^3$ so aufeinander abgestimmt sind, daß entweder beide Reste sauer oder basisch oder einer oder beide der Reste neutral sind,

$R^4$ eine Alkyl-, Phenyl-, Phenylalkyl- oder Alkylphenylgruppe mit bis zu 10 C-Atomen in der Alkylgruppe, wobei diese Gruppen ein- oder mehrfach substituiert sein können durch Alkoxy-, Cyano-, Carboxyl-, Sulfonsäureoder Acetoxy-Reste,

und

$R^5$ und $R^6$ jeweils H oder eine Alkylgruppe mit bis zu 5 C-Atomen

bedeuten

und/oder der Formel III

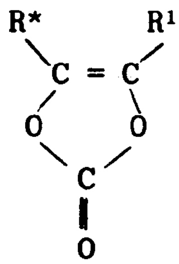

III

worin $R^*$ und $R^1$ H oder $CH_3$ bedeuten,

suspendiert und polymerisiert werden und gegebenenfalls das so erhaltene Produkt anschließend in ein Trennmaterial mit alkoholischen Hydroxylgruppen überführt wird.

7. Verfahren zur Herstellung von Trennmaterialien nach Anspruch 6, dadurch gekennzeichnet, daß unterschiedliche Monomere der Formel II und/oder III copolymerisiert werden.

8. Verwendung der Trennmaterialien nach mindestens einem der Ansprüche 1 bis 5 zur Fraktionierung von Biopolymeren.

9. Verwendung der Trennmaterialien nach mindestens einem der Ansprüche 1 bis 5 in der Affinitäts- oder Ionenaustauschchromatographie.

## Claims

1. Separating materials based on supports containing hydroxyl groups, the surfaces of which are coated with covalently bonded polymers, characterised in that

a) the support contains alcoholic hydroxyl group,

b) the covalently bonded polymers are bonded to the support by graft polymerisation,

c) the polymers have identical or different recurring units of the formula I

$$-[CR'R''-\underset{\substack{| \\ Y}}{C}R^1]_n- \qquad I$$

wherein

$R^1$ is H or $CH_3$,

Y is

$$-\underset{\substack{\| \\ O}}{C}-X,$$

-CN, -CHO, -OH, $-CH_2-NH_2$ or $-CH_2NR^2R^3$,

R′ and R″ are each H or $CH_3$, and if Y = -OH one of the radicals R′ and R″ can also be -OH,

X is -OH, $-NR^2R^3$ or $-OR^4$,

$R^2$ and $R^3$ in each case are an alkyl, phenyl, phenylalkyl or alkylphenyl group having up to 10 C atoms in the alkyl group, where these groups may be monosubstituted or polysubstituted by alkoxy, cyano, amino, mono- or dialkylamino, trialkylammonium, carboxyl, sulfonic acid, acetoxy or acetamino radicals;
a cyclic or bicyclic radical having 5-10 C atoms, wherein one or more CH or $CH_2$ groups are replaced by N or NH, N or NH and S, or N or NH and O,
or a sulfone sulfide of the structure $-(CH_2)_n-SO_2-(CH_2)_nS(CH_2)_nOH$ with n = 2-6 and one of the radicals $R^2$ and $R^3$ may also be H, where $R^2$ and $R^3$ are coordinated with one another so that both radicals are either acidic or basic or one or both of the radicals are neutral,

n is 2 to 100,

and $R^4$ is an alkyl, phenyl, phenylalkyl or alkylphenyl group having up to 10 C atoms in the alkyl group, it being possible for these groups to be mono- or polysubstituted by alkoxy, cyano, carboxyl, sulfonic acid or acetoxy radicals.

2. Separating materials according to Claim 1, characterised in that Y in formula I is

$$-\underset{\substack{\| \\ O}}{C}-X$$

X = -OH or $-OR^4$, where $R^4$ has the meaning indicated in Claim 1.

3. Separating materials according to Claim 1, characterised in that Y in formula I is

$$-\underset{\substack{\| \\ O}}{C}-X$$

with X = $-NR^2R^3$,

wherein

$R^2$ and $R^3$ in each case are

alkyl, alkoxyalkyl, cyanoalkyl, aminoalkyl, mono- or dialkylaminoalkyl, trialkylammoniumalkyl, carboxyalkyl or sulfonylalkyl each having up to 10 C atoms in the alkyl group,
phenyl which is unsubstituted or mono- substituted or polysubstituted by alkyl, -alkoxy, alkoxyalkyl, cyano, cyanoalkyl, aminoalkyl, amino, mono- or dialkylamino, mono- or dialklaminoalkyl, trialkylammonium, trialkylammoniumalkyl, carboxyl, carboxyalkyl, carboxyalkyl, sulfonic acid, sulfonylalkl, acetoxy or acetamido group(s)

and which contains up to 10 C atoms in the alkyl group,
a cyclic or bicyclic radical having 5-10 C atoms, wherein one or more CH or $CH_2$ groups are replaced by N or NH, N or NH and S, or N or NH and O,
or a sulfone sulfide of the structure $-(CH_2)_n-SO_2-(CH_2)_n-S-(CH_2)_nOH$ with n = 2-6 and one of the radicals $R^2$ and $R^3$ may also be H, where $R^2$ and $R^3$ are coordinated with one another so that either both radicals are acidic or basic or one or both of the radicals are neutral.

4. Separating materials according to Claim 1, characterised in that Y in formula I is $-CH_2NH_2$ or $-CH_2NR^2R^3$, where $R^2$ and $R^3$ have the meaning indicated in Claim 1.

5. Separating materials according to Claim 1, characterised in-that Y in formula I is -CN, -CHO or -OH.

6. Process for the preparation of separating materials according to Claims 1-5 based on supports containing alcoholic hydroxyl groups, the surfaces of which are coated with covalently bonded polymers, by graft polymerisation, characterised in that the support particles containing hydroxyl groups are suspended and polymerised in the presence of cerium(IV) ions in a solution of the monomers of the formula II

$$CR^*R^{**} = CR^1\text{-}Y \quad II$$

in which
$R^1$, $R^*$
and $R^{**}$ are each H or $CH_3$,
Y is

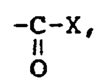

-CN, -CHO, $-OCOCHR^5R^6$, $-CH_2NH_2$
or $-CH_2NR^2R^3$,
X is -OH, $-NR^2R^3$ or $-OR^4$,
$R^2$ and $R^3$ are each an alkyl, phenyl, phenylalkyl or alkylphenyl group having up to 10 C atoms in the alkyl group, it being possible for these groups to be mono- or polysubstituted by alkoxy, cyano, amino, mono- or dialkylamino, trialkylamionium, carboxyl, sulfonic acid, acetoxy or acetamido radicals,
a cyclic or bicyclic radical having 5-10 C atoms, wherein one or more CH or $CH_2$ groups are replaced by N or NH, N or NH and S, or N or NH and O,
or a sulfone sulfide of the structure $-(CH_2)_n-SO_2-(CH_2)_n-S(CH_2)_nOH$ (sic) : with n = 2-6 and one of the radicals $R^2$ and $R^3$ may also be H, where $R^2$ and $R^3$ are coordinated with one another so that both radicals are either acidic or basic or one or both of the radicals are neutral,
$R^4$ is an alkyl, phenyl, phenylalkyl or alkylphenyl group having up to 10 C atoms in the alkyl group, it being possible for these groups to be mono- or polysubstituted by alkoxy, cyano, carboxyl, sulfonic acid or acetoxy radicals,
and
$R^5$ and $R^6$ are each H or an alkyl group having up to 5 C atoms
and/or of the formula III

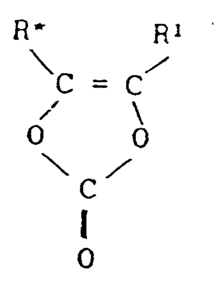

III

in which $R^*$ and $R^1$ are H or $CH_3$,
and, if appropriate, the product thus obtained is then converted into a separating material containing alcoholic hydroxyl groups.

7. Process for the preparation of separating materials according to Claim 6, characterised in that different monomers of the formula II and/or III are copolymerised.

8. Use of the separating materials according to at least one of Claims 1 to 5 for the fractionation of biopolymers.

9. Use of the separating materials according to at least one of Claims 1 to 5 in affinity chromatography or

ion exchange chromatography.

**Revendications**

1. Matière de séparation à base de support contenant des groupes hydroxyle, dont les surfaces sont enduites de polymères liés de manière convalent, **caractérisées en ce que**

a) le support contient des groupes hydroxyle alcooliques,

b) les polymères liés de manière convalente sont liés au support par polymérisation par greffage,

c) les polymères présentent des motifs périodiques identiques ou différents de formule I

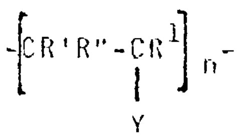

I

dans laquelle

$R^1$ représente H ou $CH_3$

Y représente

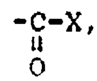

-CN, -CHO,

-OH, $CH_2$-$NH_2$ ou -$CH_2NR^2R^3$,

R′ et R″ représente chacun H ou $CH_3$ et, lorsque Y = -OH, un des radicaux R′ et R″ peut également représenter -OH,

X représente -OH, -$NR^2R^3$ ou -$OR^4$,

$R^2$ et $R^3$ représente chacun

un groupe alkyl, un groupe phényl, un groupe phénylalkyle ou un groupe alkylphényle contenant jusqu'à 10 atomes de carbone dans le groupe alkyle, ces groupes pouvant être substitués une ou plusieurs fois par un radical alcoxy, un radical cyano, un radical amino, un radical mono- ou dialkylamino, un radical trialkylammonium, un radical carboxyle, un radical d'acide sulfonique, un radical acétoxy ou radical acétamino,

un radical cyclique contenant de 5 à 10 atomes de carbone, dans lequel un ou plusieurs groupes CH ou $CH_2$ sont remplacés par N ou NH, N ou NH et S, ou encore N ou NH et O,

ou encore un sulfure sulfonique de structure -$(CH_2)_n$-$SO_2$-$(CH_2)$n-$S(CH_2)_nOH$, n étant égal à 2-6, et un des radicaux $R^2$ et $R^3$ peut également représenter H,

$R^2$ et $R^3$ étant tellement adaptés l'un à l'autre que, soit les deux radicaux sont acides ou basiques, soit un des radicaux ou les deux neutres,

n représente de 2 à 100,

$R^4$ représente un groupe alkyle, un groupe phényle, un groupe phénylalkyle ou un groupe alkylphényle contenant jusqu'à 10 atomes de carbone dans le groupe alkyle, ces groupes pouvant être substitués une ou plusieurs fois par un radical alcoxy, un radical cyano, un radical carboxyle, un radical d'acide sulfonique ou un radical acétoxy.

2. Matière de séparation selon la revendication 1, **caractérisées en ce que** Y, dans la formule I, représente

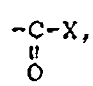

X étant égal à -OH ou -$OR^4$, $R^4$ ayant la signification indiquée dans la revendication 1.

3. Matières de séparation selon la revendication 1, **caractérisées en ce que** Y, dans la formule I, représente

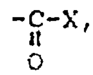

X étant égal à $-NR^2R^3$,

où

$R^2$ et $R^3$ représentent chacun

un groupe alkyle, un groupe alcoxyalkyle, un groupe cyanoalkyle, un groupe aminoalkyle, un groupe mono- ou dialkylaminoalkyle, un groupe trialkylammoniumalkyle, un groupe carboxyalkyle, un groupe d'acide sulfonique, contenant chacun jusqu'à 10 atomes de carbone dans le groupe alkyle,

un groupe phényle non substitué ou substitué par un ou plusieurs groupes alkyle, alcoxy, alcoxyalkyle, cyano, cyanoalkyle, amino, aminoalkyle, mono- ou dialkylamino, mono- ou dialkylaminoalkyl, trialkyl- ammonium, trialkylammoniumalkyle, carboxyle, carboxyalkyle, acide sulfonique, acide sulfonique-alkyle, acétoxy ou acétamino, contenant jusqu'à 10 aotmes de carbone dans le groupe alkyle,

un radical cyclique ou bicyclique contenant de 5 à 10 atomes de carbone, dans lequel un ou plusieurs groupes CH ou $CH_2$ sont remplacés par N ou NH, N ou NH et S, ou encore N ou NH et O,

ou encore un sulfure sulfonique de structure $-(CH_2)_n-SO_2-(CH_2)n-S(CH_2)_nOH$, n étant égal à 2-6, un des radicaux $R^2$ et $R^3$ pouvant également représenter H, $R^2$ et $R^3$ étant tellement adaptés l'un à l'autre que, soit les deux radicaux sont acides ou basiques, soit un des radicaux ou les deux sont neutres.

4. Matières de séparation selon la revendication 1, **caractérisées en ce que** Y, dans la formule I, représente $-CH_2NH_2$ ou $-CH_2NR^2R^3$, où $R^2$ et $R^3$ ont la signification indiquée dans la revendication 1.

5. Matières de séparation selon la revendication 1, **caractérisées en ce que** Y, dans la formule I, représente -CN, -CHO ou -OH.

6. Procédé pour la préparation de matières de séparation selon les revendications 1 à 5, à base de supports contenant des groupes hydroxyle alccoliques, dont les surfaces sont enduites de polymères liés de manière covalente, par polymérisation par greffage, **caractérisé en ce qu'**on met les particules de support contenant des groupes hydroxyle en présence d'ions Ce(IV), en suspension et on les polymérise dans une solution des monomères de formule II

$$CR^*R^{**} = CR^1Y \quad II$$

dans laquelle

$R^1$, $R^*$ et $R^{**}$ représentent chacun H ou $CH_3$,

Y représente

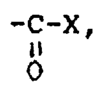

-CN, -CHO, $-OCOCHR^5R^6$,

$-CH_2NH_2$ ou $-CH_2NR^2R^3$,

X représente -OH, $-NR^2R^3$ ou $OR^4$,

$R^2$ et $R^3$ représente chacun

un groupe alkyle, un groupe phényle, un groupe phénylalkyle ou un groupe alkylphényle contenant jusqu'à 10 atomes de carbone dans le groupe alkyle, ces groupes pouvant être substitués une ou plusieurs fois par un radical alcoxy, un radical cyano, un radical amino, un radical mono- ou dialkylamino, un radical trialkylammonium, un radical carboxyle, un radical d'acide sulfonique, un radical acétoxy ou un radical acétamino,

un radical cyclique oubycyclique contenant de 5 à 10 atomes de carbone, dans lequel un ou plusieurs groupes CH ou $CH_2$ sont remplacés par N ou NH, N ou NH et S, ou encore N ou NH et O,

ou encore un sulfure sulfonique de structure $-(CH_2)_n-SO_2-(CH_2)n-S(CH_2)_nOH$, n étant égal à 2-6, un des radicaux $R^2$ et $R^3$ pouvant également représenter H, $R^2$ et $R^3$ étant tellement adaptés l'un à l'autre que, soit les deux radicaux sont acides ou basiques, soit un des radicaux ou les deux sont neutres,

$R^4$ représente un groupe alkyle, un groupe phényle, un groupe phénylalkyle ou un groupe alkylphényle contenant jusqu'à 10 atomes de carbone dans le groupe alkyle, ces groupes pouvant être substitués une ou plusieurs fois par un radical alcoxy, un radical cyano, un radical carboxyle, un radical d'acide sulfonique ou un radical acétoxy,

et

$R^5$ et $R^6$ représentent chacun H ou un groupe alkyle contenant jusqu'à 5 atomes de carbone

et/ou de formule III

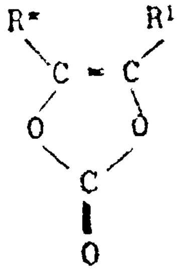

III

dans laquelle R* et $R^1$ représentent H ou $CH_3$,
et on transforme ensuite éventuellement le produit ainsi obtenu en une matière de séparation contenant des groupes hydroxyle alcooliques.

7. Procédé pour la préparation de matières de séparation selon la revendication 6, **caractérisé en ce qu'**on copolymérise différents monomères des formules II et/ou III.

8. Utilisation des matières de séparation selon au moins une des revendications 1 à 5 pour le fractionnement des biopolymères.

9. Utilisation des matières de séparation selon au moins une des revendications 1 à 5, dans la chromatographie par affinité ou par échange d'ions.